# EUROPÄISCHE PATENTANMELDUNG

(11) **EP 1 566 249 A1**
(43) Veröffentlichungstag der Anmeldung: **24.08.2005**
(21) Anmeldenummer: 04029150.2
(22) Anmeldetag: 09.12.2004
(51) Int. Cl.: B26F 1/32, B23B 47/28, E05D 11/00, B27M 1/04

(54) **Montagevorrichtung zum Stanzen einer Durchgangsbohrung an einer Möbelwand**

(30) Priorität: 21.02.2004 DE 202004002775 U
(71) Anmelder: MOLL SYSTEM- UND FUNKTIONSMÖBEL GMBH, D-73344 Gruibingen (DE)
(72) Erfinder: Looser, Hans, 73117 Wangen (DE)
(74) Vertreter: Reimold, Otto

(57) **Zusammenfassung**

Eine Montagevorrichtung zum Herstellen einer Durchgangsbohrung an einer vorbestimmten Stelle einer Möbelwand (7) weist ein von einem Formstück gebildetes Lehrenelement (15) auf, das eine auf die Möbelwand (7) legbare Auflagefläche (16) und eine Anschlagflächenanordnung (17, 19) zum seitlichen Anlegen des Lehrenelements (15) an eine vor die Möbelwand (7) vorstehende Anschlaganordnung bildet. Das Lehrenelement (15) enthält eine rechtwinkelig zur Auflagefläche (16) gerichtete, durchgehende Lagerbohrung (22), der ein Durchschlagelement (23) zugeordnet ist, das eine in der Lagerbohrung (22) geführt verschiebbare, mit Bezug auf die Dicke (D) des Lehrenelements (15) längere Schaftpartie (24) und einen an das bei der Anwendung der Möbelwand (7) abgewandte Ende der Schaftpartie (24) angesetzte Kopfpartie (25) zum Aufschlagen mit einem Schlaggerät aufweist, derart, dass das Durchschlagelement (23) bei an die Anschlaganordnung angelegtem Lehrenelement (15) an der vorbestimmten Stelle der herzustellenden Durchgangsbohrung (8) angeordnet ist.

## Beschreibung

Die Erfindung betrifft eine Montagevorrichtung zum Herstellen einer Durchgangsbohrung an einer vorbestimmten Stelle einer Möbelwand.

Sogenannte Anbaumöbel können einzeln oder unmittelbar nebeneinander aufgestellt werden. Im letzteren Falle werden die einander zugewandten Möbelwände der beiden jeweiligen Möbelstücke, beispielsweise Schränke, mit Hilfe von Verbindungsschrauben miteinander verbunden, sodass sich ein fester Zusammenhalt ergibt. Hierzu werden an der betreffenden Stelle fluchtende Durchgangsbohrungen in die beiden Möbelwände eingebracht, sodass die jeweilige Verbindungsschraube hindurchgeführt werden kann.

Die Durchgangsbohrungen werden üblicherweise vom Möbelhersteller angebracht. Auf diese Weise ist gewährleistet, dass bei jeder Möbelwand die jeweilige Durchgangsbohrung an der gleichen Stelle sitzt.

Dies bringt jedoch mit sich, dass beim einzelnen Aufstellen eines solchen Möbelstücks die Durchgangsbohrungen der Möbelwände sichtbar sind. Dies stört den optischen Eindruck.

Die vorliegende Erfindung will hier Abhilfe schaffen und sieht hierzu eine Montagevorrichtung vor, die dadurch gekennzeichnet ist, dass sie ein von einem Formstück gebildetes Lehrenelement aufweist, das eine auf die Möbelwand legbare Auflagefläche und eine Anschlagflächenanordnung zum seitlichen Anlegen des Lehrenelements an eine vor die Möbelwand vorstehende Anschlaganordnung bildet, und dass das Lehrenelement eine rechtwinkelig zur Auflagefläche gerichtete, durchgehende Lagerbohrung enthält, der ein Durchschlagelement zugeordnet ist, das eine in der Lagerbohrung geführt verschiebbare, mit Bezug auf die Dicke des Lehrenelements längere Schaftpartie und einen an das bei der Anwendung der Möbelwand abgewandte Ende der Schaftpartie angesetzte Kopfpartie zum Aufschlagen mit einem Schlaggerät aufweist, derart, dass das Durchschlagelement bei an die Anschlaganordnung angelegtem Lehrenelement an der vorbestimmten Stelle der herzustellenden Durchgangsbohrung angeordnet ist.

Nunmehr ist es nicht mehr erforderlich, dass die Durchgangsbohrungen bereits beim Möbelhersteller angebracht werden. Mit Hilfe der erfindungsgemäßen Montagevorrichtung ist es möglich, die Durchgangsbohrungen erst im Bedarfsfalle herzustellen, wenn man nebeneinander aufgestellte Möbelstücke miteinander verbinden will.

Die Lage des Lehrenelements an der betreffenden Möbelwand wird im Anwendungsfall durch die Anschlaganordnung am Möbelstück vorgegeben. Auf diese Weise wird sichergestellt, dass die Durchgangsbohrung an der gewünschten Stelle eingebracht wird. Hierzu bringt man das Lehrenelement mit zurückgezogenem Durchschlagelement in Stellung und schlägt dann mit einem beispielsweise von einem Hammer gebildeten Schlaggerät auf die Kopfpartie des Durchschlagelements, sodass dessen vorderes Ende die Möbelwand durchschlägt.

In diesem Zusammenhang ist es insbesondere bei Möbelwänden größerer Dicke zweckmäßig, dass die Möbelwand an der vorbestimmten Stelle an ihrer entgegengesetzten Wandseite eine bereits eingebrachte Sackbohrung aufweist, sodass mit dem Durchschlagelement nur noch ein verhältnismäßig dünnes Wandmaterialstück durchschlagen werden muss, um aus der von außen her unsichtbaren Sackbohrung eine Durchgangsbohrung zu machen.

Das Lehrenelement kann man so bemaßen, dass man an dem Möbelstück ohnehin vorhandene Vorsprünge als Anschlaganordnung verwenden kann. Dies ist beispielsweise bei Schränken der Fall, bei denen die mit mindestens einer derartigen Durchgangsbohrung zu versehende seitliche Möbelwand mit Bezug auf die Oberwand, die Rückwand und ggf. die Bodenwand des Möbelstücks etwas zurückgesetzt ist. Die sich dadurch ergebenden vorstehenden Bereiche der Oberwand, der Rückwand und ggf. der Bodenwand können als Anschläge benutzt werden.

Weitere Vorteile sind, dass die erfindungsgemäße Montagevorrichtung unkompliziert in der Handhabung ist und einen einfachen Aufbau aufweist, sodass sie sehr kostengünstig hergestellt werden kann.

Zweckmäßige Ausgestaltungen der Erfindung sind in den Unteransprüchen angegeben.

Nachstehend wird ein Ausführungsbeispiel der Erfindung anhand der Zeichnung beschrieben. Es zeigen:
- Figur 1: ein Möbelstück in Gestalt eines Schrankes in Seitenansicht zusammen mit einem erfindungsgemäßen Lehrenelement bei dessen Anwendung, d.h. mit Hilfe des Lehrenelementes und einem Schlaggerät wird die betreffende Durchgangsbohrung eingebracht (der das Lehrenelement aufweisende Bereich ist außerdem vergrößert herausgezeichnet),
- Figur 2: der Eckbereich des Möbelstückes nach Figur 1, an dem das Lehrenelement angesetzt worden ist, in gleicher Schrägansicht wie in Figur 1, jedoch in vergrößerter Darstellungsweise,
- Figur 3: die Anordnung nach Figur 2 im vergrößerten Querschnitt gemäß der Schnittlinie III - III,
- Figur 4: das Lehrenelement zusammen mit dem Durchschlagelement in gesonderter Darstellung in zur Querschnittsdarstellung der Figur 3 entsprechender Seitenansicht gemäß Pfeil IV in Figur 2, wobei das Durchschlagelement außerhalb der Durchgangsbohrung des Lehrenelements gezeichnet ist,
- Figur 5: die Anordnung nach Figur 4 bei durch die Durchgangsbohrung gestecktem Durchschlagelement und
- Figur 6: die einander zugewandten Seitenwände von zwei nebeneinander aufgestellten Möbelstücken im der Figur 3 entsprechenden Querschnitt in Teildarstellung, wobei die beiden Seitenwände fluchtend zueinander angeordnete Durchgangsbohrungen für den Durchgriff einer Verbindungsschraube aufweisen.

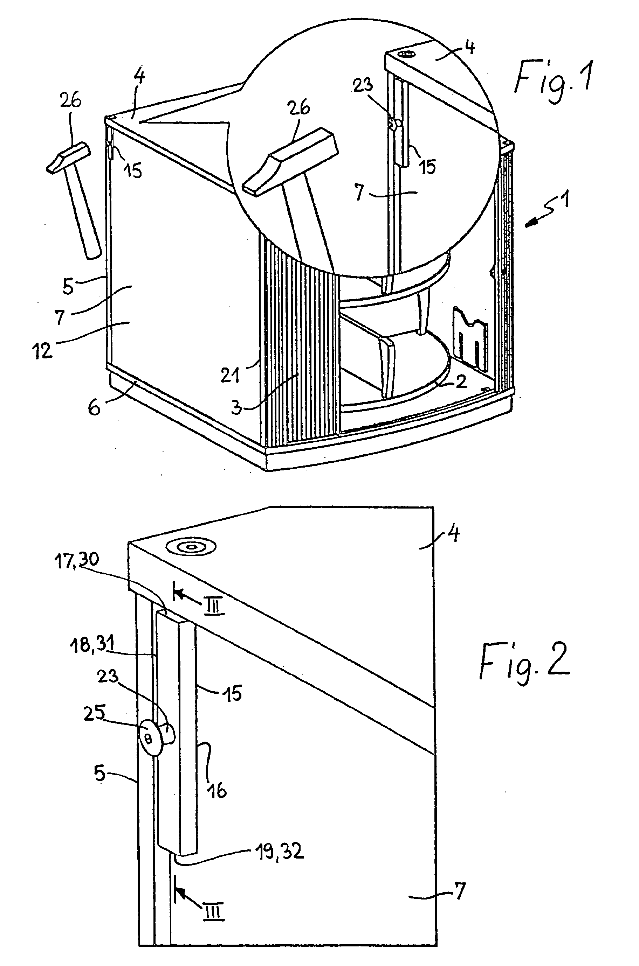

Aus Figur 1 geht ein Möbelstück 1 in Gestalt eines Schrankes hervor, der ein drehbares Karussell 2 zum Einstellen von Ordnern enthält. An der Vorderseite des Schrankes ist an Stelle einer Türe ein seitlich verschiebbarer Rollladen vorhanden.

Derlei Dinge sind im vorliegenden Zusammenhang jedoch nicht weiter von Interesse. Es könnte sich auch um einen anderen Schrank als einen Aktenschrank handeln.

Das Möbelstück 1 weist ferner eine seine Oberseite bildende Oberwand 4, eine Rückwand 5, eine Bodenwand 6 und an jeder Seite eine seitliche Möbelwand 7 auf. Die Oberwand 4, die Rückwand 5 und die Bodenwand 6 stehen zur Seite hin etwas über die seitliche Möbelwand 7 vor.

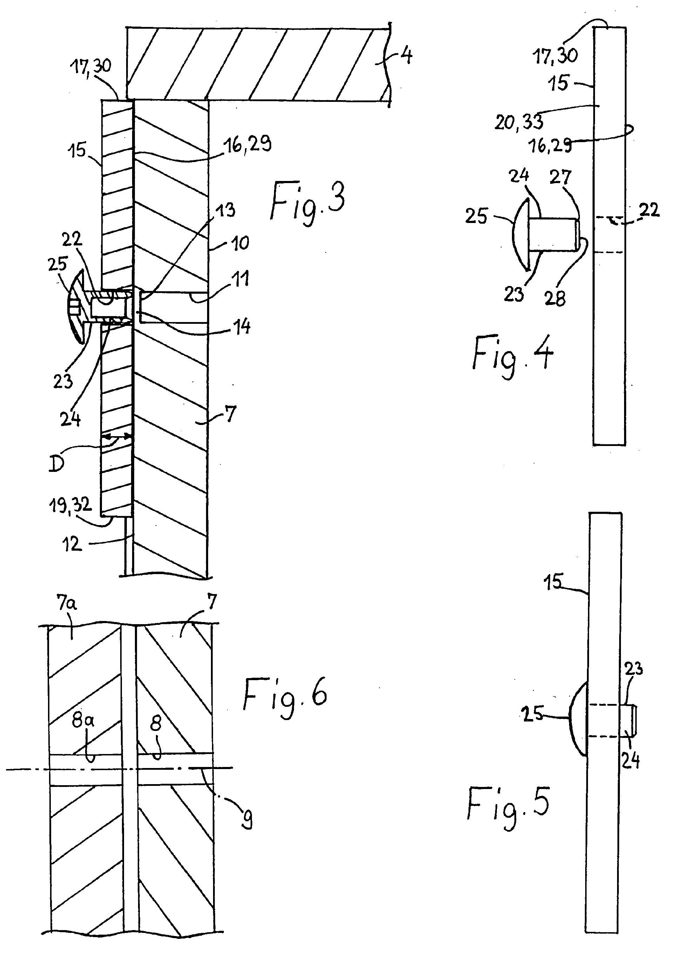

Mehrere solche Möbelstücke 1 können Seite an Seite nebeneinander aufgestellt werden. Dabei kann man die einander zugewandten seitlichen Möbelwände 7, 7a (siehe Figur 6) von jeweils zwei einander benachbarten Möbelstücken 1 fest miteinander verbinden. Hierzu versieht man die beiden seitlichen Möbelwände 7, 7a, die aus Holz oder holzartigem Material bestehen, an der jeweiligen Verbindungsstelle mit fluchtend zueinander angeordneten Durchgangsbohrungen 8, 8a, sodass eine nur strichpunktiert angedeutete Verbindungsschraube 9 hindurchgesteckt werden kann. Wenn hier der Einfachheit halber von einer "Verbindungsschraube" gesprochen wird, so ist damit auch eine zweiteilige Gewindeverbindung gemeint, die von einem Hohlmutterteil und einem in dieses einzuschraubenden Gewindebolzenteil gebildet wird, die jeweils einen im Durchmesser vergrößerten Kopf aufweisen und von entgegengesetzten Seiten 4 in das Bohrungspaar 8, 8a eingesteckt und miteinander verschraubt werden. Solche Anordnungen sind allgemein üblich, sodass sich eine weitere Beschreibung erübrigt.

Im vom Hersteller gelieferten Zustand der Möbelstücke 1 weisen die seitlichen Möbelwände 7, 7a noch keine Durchgangsbohrungen 8, 8a auf. Die Durchgangsbohrungen 8, 8a werden erst im Bedarfsfalle angebracht, wenn man zwei Möbelstücke 1 miteinander verbinden will. Im Lieferzustand befindet sich jedoch an jeder vorbestimmten Verbindungsstelle an der Innenseite 10 der betreffenden seitlichen Möbelwand 7 eine seitens des Herstellers eingebrachte Sackbohrung 11, die bis nahe der Außenseite 12 der Möbelwand 7 reicht. Zwischen dem Boden 13 der Sackbohrung 11 und der Außenseite 12 der Möbelwand 7 ist noch ein verhältnismäßig dünnes Wandmaterialstück 14 vorhanden.

Erst im Bedarfsfall macht man aus der Sackbohrung 11 die betreffende Durchgangsbohrung 8 (es versteht sich, dass das gleiche für die benachbarte seitliche Möbelwand 7a gilt). Hierzu wird das Wandmaterialstück 14 entfernt. Dies erfolgt mit Hilfe eines von einem Formstück gebildeten Lehrenelements 15, das eine außen auf die Möbelwand 7 legbare Auflagefläche 16 und eine beim Ausführungsbeispiel von vier Anschlagflächen 17, 18, 19, 20 gebildete Anschlagflächenanordnung bildet. Diese Anschlagflächenanordnung dient zum seitlichen Anlegen des Lehrenelements 15 an eine seitlich vor die Möbelwand 7 vorstehende Anschlaganordnung. Die Anschlaganordnung wird beim Ausführungsbeispiel von dem bereits erwähnten und insbesondere aus Figur 2 ersichtlichen Überstand der Oberwand 4, der Rückwand 5 und der Bodenwand 6 vor die seitliche Möbelwand 7 gebildet.

Das Lehrenelement 15 lässt sich also in den Eckbereichen des seitlichen Wandelements 7 an die überstehenden Bereiche der Oberwand 5, der Rückwand 5 und der Bodenwand 6, ggf. auch an eine entsprechend vorstehende Anschlagleiste 21 an der Vorderseite des Möbelstücks 1, anlegen, sodass es eine vorbestimmte Position einnimmt.

Das Lehrenelement 15 enthält eine rechtwinkelig zu seiner Auflagefläche 16 gerichtete, durchgehende Lagerbohrung 22. Der Lagerbohrung 22 ist ein Durchschlagelement 23 zugeordnet, das eine in der Lagerbohrung 22 geführt verschiebbare, mit Bezug auf die Dicke D des Lehrenelements 15 längere Schaftpartie 24 und eine Kopfpartie 25 aufweist, die an das im Anwendungsfall der Möbelwand 7 abgewandte Ende der Schaftpartie 24 angesetzt ist und zum Aufschlagen mit einem Schlaggerät 26 dient.

Das Durchschlagelement 23 ist so am Lehrenelement 15 angeordnet, dass es sich bei auf die Möbelwand 7 aufgelegtem und an die möbelseitige Anschlaganordnung angelegtem Lehrenelement 15 an der vorbestimmten Stelle der herzustellenden Durchgangsbohrung 8, d.h. an der Stelle der Sachbohrung 11 befindet. Das Durchschlagelement 23 steht zunächst noch an der der Auflagefläche 16 entgegengesetzten Seite aus der Lagerbohrung 22 heraus (Figur 3). Schlägt man nun mit dem Schlaggerät 26 auf die Kopfpartie 25, wird das Wandmaterialstück 14 der Möbelwand 7 abgetrennt, sodass aus der Sackbohrung 11 die Durchgangsbohrung 8 entsteht. Figur 5 zeigt das Durchschlagelement 23 im nach innen geschlagenen Zustand (das Wandelement 7 ist hier jedoch nicht gezeigt).

Die Schaftpartie 24 weist eine kreiszylindrische Gestalt auf. Sie kann ferner an ihrem der Kopfpartie 25 entgegengesetzten vorderen Ende an ihrem Außenumfang konusartig angeschrägt sein, sodass sich ein kurzer, sich verjüngender Endbereich 27 ergibt. Mit Hilfe dieses sich verjüngenden Endbereichs 27 erhält man eine verbesserte Zentrierung beim Einschlagen des Wandmaterialstücks 14, falls die Schaftpartie 14 nicht ganz exakt konzentrisch zur Sackbohrung 11 auftrifft. Die Schaftpartie 24 kann ferner an ihrem der Kopfpartie 25 entgegengesetzten vorderen Ende eine axial gerichtete, ringförmig umlaufende Schneide 28 bilden.

Des Weiteren ist aus der Zeichnung ersichtlich, dass die Kopfpartie 25 größeren Durchmesser als die Schaftpartie 24 aufweisen kann, sodass sie im eingeschlagenen Zustand außen am Lehrenelement 15 anschlägt.

Eine weitere zweckmäßige Maßnahme besteht darin, dass die Schaftpartie 24, ausgehend von ihrem der Kopfpartie 25 entgegengesetzten Ende, zumindest über einen Teil ihrer Länge hinweg hohl ausgebildet ist (siehe Figur 3).

Das Durchschlagelement 23 kann von einer Hohlschraube gebildet werden. Das zugehörige Innengewinde wurde in Figur 3 der Übersichtlichkeit wegen nicht eingezeichnet. Derartige Hohlschrauben sind handelsüblich, sodass das Durchschlagelement 23 nicht als Sonderteil hergestellt werden muss.

Die Sackbohrung 11 muss nicht unbedingt vorhanden sein. Dies richtet sich nach der Dicke D der Möbelwand 7.

Die Gestalt des Lehrenelements 15 richtet sich insbesondere nach der möbelseitigen Anschlaganordnung und dem Ort der herzustellenden Durchgangsbohrung 8. Im dargestellten Falle weist das Lehrenelement 15 eine plattenförmige Gestalt auf. Dabei ist das Lehrenelement 15 zweckmäßigerweise leistenförmig ausgebildet.

In Richtung der Lagerbohrung 22 gesehen ist der Umfang des Lehrenelements 15 rechteckig. Dies schließt auch die Möglichkeit einer quadratischen Ausbildung ein. In jedem Falle ist eine quaderförmige Gestalt zweckmäßig.

Die Auflagefläche 16 des Lehrenelements 15 wird von einer Flachseite 29 des Lehrenelements 15 gebildet.

Ferner wird jede Anschlagfläche 17, 18, 19, 20 von einer Umfangsfläche 30, 31, 32, 33 des Lehrenelements 15 gebildet.

Im Anwendungsfall bilden jeweils zwei einander benachbarte Anschlagflächen des Lehrenelements 15 ein an zwei möbelseitigen Anschlägen anliegendes Anschlagflächenpaar. Im dargestellten Falle sind dies die beiden von den Umfangsflächen 30, 31 gebildeten Anschlagflächen 17, 18, die an die überstehenden Bereiche der Oberwand 4 und der Rückwand 5 angelegt sind. Bringt man das Lehrenelement 15 in einem der anderen Eckbereiche der Möbelwand 7 in Position, können zwei andere Umfangsflächen das wirksame Anschlagflächenpaar bilden.

Ferner ist es zweckmäßig, dass die Lagerbohrung 22 zentral am Lehrenelement 15 angeordnet ist. Auf diese Weise kann man das Lehrenelement 15 auch in umgedrehter Position verwenden, sodass bei der Anwendung nicht auf die Orientierung des Lehrenelements 15 geachtet werden muss.

Die Erfindung wurde oben in Zusammenhang mit dem Verbinden der einander benachbarten Möbelwände von nebeneinander aufgestellten Anbaumöbeln beschrieben.

Es versteht sich jedoch, dass es sich um beliebige Anbauteile handeln kann, die miteinander oder mit einem Möbelstück verbunden werden sollen.

Ferner kann sich die hergestellte Durchgangsbohrung auch an einer anderen Möbelwand als der Seitenwand befinden, so beispielsweise an der Rückwand des Möbelstücks, wo man die Durchgangsbohrung zur Befestigung des Möbelstücks an einer Gebäudewand oder einer sonstigen Wand benutzen kann.

Des weiteren kann die erfindungsgemäße Montagevorrichtung nicht nur bei aus Holz oder holzartigem Material bestehenden Möbelwänden sondern auch bei Möbelwänden aus Metall, insbesondere geeignet dünnwandiges Metallblech, verwendet werden. In diesem Falle kann es empfehlenswert sein, an der Innenseite der Möbelwand an der Stelle der von außen her einzubringenden Durchgangsbohrung eine dem Umfang der Durchgangsbohrung entsprechende Prägelinie oder dergleichen vorzusehen.

## Patentansprüche

1. Montagevorrichtung zum Herstellen einer Durchgangsbohrung an einer vorbestimmten Stelle einer Möbelwand, **dadurch gekennzeichnet, dass** sie ein von einem Formstück gebildetes Lehrenelement (15) aufweist, das eine auf die Möbelwand (7) legbare Auflagefläche (16) und eine Anschlagflächenanordnung (17, 18, 19, 20) zum seitlichen Anlegen des Lehrenelements (15) an eine vor die Möbelwand (7) vorstehende Anschlaganordnung bildet, und dass das Lehrenelement (15) eine rechtwinkelig zur Auflagefläche (16) gerichtete, durchgehende Lagerbohrung (22) enthält, der ein Durchschlagelement (23) zugeordnet ist, das eine in der Lagerbohrung (22) geführt verschiebbare, mit Bezug auf die Dicke (D) des Lehrenelements (15) längere Schaftpartie (24) und einen an das bei der Anwendung der Möbelwand (7) abgewandte Ende der Schaftpartie (24) angesetzte Kopfpartie (25) zum Aufschlagen mit einem Schlaggerät (26) aufweist, derart, dass das Durchschlagelement (23) bei an die Anschlaganordnung angelegtem Lehrenelement (15) an der vorbestimmten Stelle der herzustellenden Durchgangsbohrung (8) angeordnet ist.

2. Montagevorrichtung nach Anspruch 1, **dadurch gekennzeichnet, dass** die Schaftpartie (24) eine kreiszylindrische Gestalt aufweist.

3. Montagevorrichtung nach Anspruch 1 oder 2, **dadurch gekennzeichnet, dass** die Schaftpartie (24) an ihrem der Kopfpartie (25) entgegengesetzten vorderen Ende an ihrem Außenumfang konusartig angeschrägt ist.

4. Montagevorrichtung nach einem der Ansprüche 1 bis 3, **dadurch gekennzeichnet, dass** die Schaftpartie (24) an ihrem der Kopfpartie (25) entgegengesetzten vorderen Ende eine axial gerichtete, ringförmig umlaufende Schneide (28) aufweist.

5. Montagevorrichtung nach einem der Ansprüche 1 bis 4, **dadurch gekennzeichnet, dass** die Kopfpartie (25) einen größeren Durchmesser als die Schaftpartie (24) aufweist.

6. Montagevorrichtung nach einem der Ansprüche 1 bis 5, **dadurch gekennzeichnet, dass** die Schaftpartie (24) ausgehend von ihrem der Kopfpartie (25) entgegengesetzten Ende zumindest über einen Teil ihrer Länge hinweg hohl ausgebildet ist.

7. Montagevorrichtung nach Anspruch 5 und 6, **dadurch gekennzeichnet, dass** das Durchschlagelement (23) von einer Hohlschraube gebildet wird.

8. Montagevorrichtung nach einem der Ansprüche 1 bis 7, **dadurch gekennzeichnet, dass** das Lehrenelement (15) eine plattenförmige Gestalt aufweist.

9. Montagevorrichtung nach einem der Ansprüche 1 bis 8, **dadurch gekennzeichnet, dass** das Lehrenelement (15) eine leistenförmige Gestalt aufweist.

10. Montagevorrichtung nach einem der Ansprüche 1 bis 9, **dadurch gekennzeichnet, dass** das Lehrenelement (15) in Richtung seiner Lagerbohrung (22) gesehen einen rechteckigen Umfang aufweist.

11. Montagevorrichtung nach Anspruch 10, **dadurch gekennzeichnet, dass** das Lehrenelement (15) eine quaderförmige Gestalt aufweist.

12. Montagevorrichtung nach einem der Ansprüche 1 bis 11, **dadurch gekennzeichnet, dass** die Auflagefläche (16) von einer Flachseite des Lehrenelements (15) gebildet wird.

13. Montagevorrichtung nach einem der Ansprüche 1 bis 12, **dadurch gekennzeichnet, dass** jede Anschlagfläche (17, 18, 19, 29) der Anschlagflächenanordnung von einer Umfangsfläche (30, 31, 32, 33) des Lehrenelements (15) gebildet wird.

14. Montagevorrichtung nach Anspruch 13, **dadurch gekennzeichnet, dass** jeweils zwei einander benachbarte Anschlagflächen ein bei der jeweiligen Anwendung wirksames an zwei möbelseitigen Anschlägen anliegendes Anschlagflächenpaar bilden.

15. Montagevorrichtung nach einem der Ansprüche 10 bis 14, **dadurch gekennzeichnet, dass** die Lagerbohrung (22) zentral am Lehrenelement (15) angeordnet ist.

16. Montagevorrichtung nach einem der Ansprüche 1 bis 15, **dadurch gekennzeichnet, dass** sie eine in die dem Lehrenelement (15) bei seiner Anwendung entgegengesetzte Innenseite der Möbelwand (7) an der vorbestimmten Stelle angebrachte Sackbohrung (11) aufweist.
